Europäisches Patentamt

European Patent Office

Office européen des brevets

(19)

(11) Veröffentlichungsnummer: **0 219 638 B1**

## (12) EUROPÄISCHE PATENTSCHRIFT

(45) Veröffentlichungstag der Patentschrift: **31.07.91**

(21) Anmeldenummer: **86111315.7**

(22) Anmeldetag: **16.08.86**

(51) Int. Cl.⁵: **G09G 1/04,** H04N 3/27,
G06F 3/153, H04N 5/44

(54) **Schaltungsanordnung in einem Bildschirmgerät zur Vermeidung von Geometrieverzerrungen bei der Darstellung von Texten, Grafiken und Symbolen.**

(30) Priorität: **22.08.85 DE 3529961**

(43) Veröffentlichungstag der Anmeldung:
**29.04.87 Patentblatt 87/18**

(45) Bekanntmachung des Hinweises auf die
Patenterteilung:
**31.07.91 Patentblatt 91/31**

(84) Benannte Vertragsstaaten:
**AT BE CH FR GB IT LI NL SE**

(56) Entgegenhaltungen:
**DE-A- 2 360 596**
**DE-A- 3 505 871**
**DE-C- 3 331 007**

(73) Patentinhaber: **LOEWE OPTA GMBH**
**Industriestrasse 11 Postfach 220**
**W-8640 Kronach(DE)**

(72) Erfinder: **Heine, Kurt**
**Perlachweg 6**
**W-8218 Unterwössen(DE)**

EP 0 219 638 B1

**Beschreibung**

Die Erfindung betrifft eine Schaltungsanordnung in einem Bildschirmgerät gemäß dem Oberbegriff des Patentanspruchs 1.

Die Software und die Hardware von Personal und Home Computern ist in der Regel für 60 Hz geschrieben und für eine Zeilenzahl von 525 Zeilen ausgelegt. Die von den Computern abgreifbaren RGB-Informationen und Synchronimpulse oder das FBAS-Signal entsprechen mithin dem NTSC-Standard nach FCC-Norm. Darüber hinaus sind auch Computer erhältlich, die hardware- und softwaremäßig dem PAL-System nach CCIR-Norm angepaßt sind: Zeilensprung oder Vollbildverfahren, Bildwechselfrequenz 25 Hz, Vertikalfrequenz 50 Hz, Zeilen 625, Zeilenfrequenz 15,625 kHz. Die Ansteuerung des Monitors ist entsprechend dieser Norm ausgelegt. Das Bild selbst besteht aus jeweils 625 Zeilen, von denen Je nach Vertikalauflösung nur eine bestimmte Anzahl von Zeilen mit Bildinformationen belegt ist.

Bei Home Computern mit einer Auflösung von 256 dots horizontal und 192 vertikal ist eine Zeilenzahl von 262 nach FCC-Norm vorgesehen, von denen jedoch nur 192 Zeilen mit Informationen belegt sind. Die restlichen sind unbelegt. Bei der CCIR-Norm angepaßten Computern ist hingegen eine wesentlich höhere Vertikalauflösung möglich (312 bzw. 313 Zeilen), sofern die maximal mögliche Zeilenzahl von 625 genutzt wird.

Es gibt aber auch Computer, die über den CRT-Controller gesteuert die gespeicherten Zeileninformationen durch "Leerzeilen" ergänzen, um eine Wiedergabe auf dem Bildschirm eines PAL-Empfängers zu ermöglichen.

Die Software und Hardware ist jedoch für 60 Hz und 525 Zeilen ausgelegt. Der Anschluß eines solchen Computers, der im Grunde für die FCC-Norm ausgelegt ist, an ein PAL-Gerät nach CCIR-Norm führt zwangsläufig zu einer Darstellungsverfälschung der Informationen. Insbesondere bei grafischen Darstellungen führt dies zu einem völlig falschen Informationsgehalt. So wird z.B. ein Kreis zu einer Ellipse, da nur maximal 525 Zeilen mit Inhalten versehen sind und somit der Gesamtbildinhalt bei konstantem Bildschirmformat (4:3) in der Horizontalen zwar ausgefüllt, in der Vertikalen jedoch gedrängt dargestellt erscheint.

Der Erfindung liegt, ausgehend von dem beschriebenen Sachverhalt, bei der Informationsdarstellung von Texten, Grafiken und Symbolen auf einem Bildschirm in einem Gerät eingangs beschriebener Art, die Aufgabe zugrunde, eine Schaltungsanordnung für ein Wiedergabegerät mit einem angeschlossenen Computer vorzusehen, die bei Darstellung einer Bildinformation nach FCC-Norm auf einem Bildschirm nach CCIR-Norm Geometrieverzerrungen der Informationsinhalte verhindert.

Die Aufgabe wird erfindungsgemäß nach der im Patentanspruch 1 wiedergegebenen technischen Lehre gelöst.

Vorteilhafte Weiterbildungen der Erfindung sind in den Unteransprüchen beschrieben.

Während insbesondere nach den Ansprüchen 1 bis 4 die Normerkennung durch Herausfiltern der Synchronsignale, Zählung der Zeilenzahl und H-Koinzidenzschaltungen erfolgt und damit die Umschaltsignale weitergeleitet werden, ist im Patentanspruch 8 eine Schaltung vorgesehen, bei der unter Anwendung eines Prozessors, z.B. eines Mikroprozessors, die Normerkennung durch logische Auswertung der Synchronimpulse und Zeilenzahl erfolgt. Dieser Prozessor gibt dann die entsprechenden Steuerbefehle bzw. die Synchronisationsimpulse zur Synchronisation des Horizontal- und Vertikaloszillators sowie zur Umschaltung der Vertikalamplitude aus. Hierdurch kann eine Schaltungsvereinfachung erzielt werden, da gesonderte H-Koinzidenzschaltungen nicht benötigt werden.

Aus der DE-B-33 31 007 ist es zur Darstellung von Texten, Grafiken und Symbolen mittels eines Empfangsgerätes für Fernsehempfangssignale nach der CCIR-Norm (Zeilensprungverfahren, Bildwechselfrequenz 25 Hz, Vertikalfrequenz 50 Hz, Zeilen 625 und Zeilenfrequenz 15,6825 kHz) bekannt, die Bildwechselfrequenz unter Beibehaltung der Zeilenzahl auf 60 Hz und damit auf die Vertikalfrequenz zu erhöhen, wodurch sich die Zeilenfrequenz bei konstanter Zeilenzahl entsprechend auf 18,75 kHz ebenfalls erhöht. Durch diese Maßnahme - bei gleichzeitigem deckungsgleichen Schreiben der angebotenen Halbbilder, z.B. unter Anwendung eines Verfahrens, wie es in der DE-A-29 49 020 beschrieben ist -, werden das lästige Flächenflimmern, das bei einer Vertikal- und Bild frequenz von 50 Hz noch zu verzeichnen ist, und das Zwischenzeilenflimmern vermieden. Aus den genannten beiden Schriften sind entsprechende Schaltungsanordnungen und Steuersysteme, die in Abhängigkeit eines Oszillators eines Textgenerators - analog dem eines Computers - bekannt, die das Großflächenflimmern durch Anhebung der Bildelementefolgefrequenz auf 60 Hz und damit über die Verschmelzungsfrequenz anheben. Die Verschmelzungsfrequenz hängt hauptsächlich von der mittleren Leuchtdichte des Bildschirms der Nachleuchtdauer des Leuchtstoffes, der Größe der Bildschirms sowie der Lage des Bildschirms zum Gesichtsfeld ab. Flimmern im seitlichen Gesichtsfeld wird dabei störender empfunden als Flimmern im zentralen Gesichtsfeld. Einem Flimmern kann bekanntlich z.B. durch Änderung der Aufstellung, Veränderung und Raumbeleuchtung oder durch geräteseitige Maßnahmen, wie die Erhöhung der Nachleuchtdauer des Leuchtstoffes oder die Erhöhung der Bildelementfolgefrequenz, entgegengewirkt werden. Letztere Möglichkeit ist in den vorgenannten Veröffentlichungen beschrieben.

Nach der FCC-Norm (USA, Japan) ist ohnehin eine höhere Vertikalfrequenz, nämlich 60 Hz, standardmäßig vorgesehen, so daß bei der Textdarstellung das Großflächenflimmern grundsätzlich so weit herabgesetzt wird, daß es nicht mehr als störend empfunden wird. Das Zwischenzeilenflimmern wird bekanntlich, wie aus der zitierten DE-A-29 59 020 hervorgeht, durch Übereinanderschreiben der Zeilen der beiden Halbbilder ebenfalls eliminiert.

Grundsätzlich ist es aus der DE-B-31 50 243 und der DE-A-32 40 139 bekannt, das Bildformat bei der Textwiedergabe nur so zu vergrößern, daß es die Fläche des Bildschirmes voll ausfüllt. Dabei wird jedoch sowohl in horizontaler als auch vertikaler Richtung eine Bildvergrößerung bewirkt. Das Bildformat wird wahlweise gegenüber der Bildschirmfläche verändert. Würde bei einem solchen Gerät ein Bildsignal von einem Computer nach NTSC angelegt, so würde eine Informationsverfälschung sowohl in horizontaler als auch vertikaler Richtung bewirkt werden, da das Bildschirmformat in horizontaler und vertikaler Richtung überschrieben würde.

Das Bildschirmformat ist sowohl in der FCC-Norm als auch in der CCIR-Norm festgelegt (4:3). Die Informationsinhalte in horizontaler Richtung werden bei beiden Systemen in gleicher Weise vollständig unter Einhaltung des Bildschirmformates wiedergegeben. Die Vertikalauflösungen weichen jedoch aufgrund der unterschiedlichen Zeilenzahl wesentlich voneinander ab. Es ist ersichtlich, daß die Zeilenstruktur bei gleichem Bildschirmformat nach der FCC-Norm (NTSC) gröber erscheint als bei der Darstellung nach der CCIR-Norm (625 Zeilen).

Da die meisten Home und Personal Computer, die an die Bildwiedergabegeräte, wie Monitoren und Fernsehempfangsgeräte, anschließbar sind, ursprünglich für die Bedürfnisse des US und des japanischen Marktes ausgelegt sind, weisen sie sowohl bezüglich der Software als auch der Hardware FBAS-Ausgangssignale bzw. RGB-Ausgangs- und Synchronimpulssignale auf, die dieser Norm entsprechen. Eine originalgetreue Wiedergabe bei Grafiken und Symbolen ist mithin nur durch Anschluß an normgerechte Monitore und Fernsehempfangsgeräte möglich. Die Erfindung vermittelt eine technische Lehre, die es gestattet, daß die Bildinhalte auch ohne Geometrieverzerrung mittels nach CCIR-Norm ausgelegter Farbfernsehempfangsgeräte bzw. Monitore wiedergebbar sind. Voraussetzung hierfür ist gemäß Anspruch 1 und 3, daß eine erste Schaltungsanordnung vorgesehen ist, die den Vertikalfrequenzgenerator auf 60 Hz Vertikalfrequenz umschaltet, zugleich aber auch den Horizontaloszillator so steuert, daß daß die Horizontalfrequenz proportional erhöht wird, um bei gleichem Bildformat die normgerechte Anzahl von Zeilen zu schreiben. Die weiterhin notwendige Schaltung zur Veränderung der Vertikalamplitude, nämlich um das Maß, das den jeweils überschreibenden 100 Zeilen entspricht, wird von der gleichen Normerkennungsschaltung angesteuert. Es sind allerdings auch Computer bekannt, insbesondere MSX-Rechner, die einen CRT-Controller für PAL-Empfänger aufweisen, die durch Addition von Leerzeilen den Speicherinhalt auf 625 Zeilen ergänzen und die 50 Hz Synchronisation sicherstellen. Bedauerlicherweise handelt es sich hier nicht um eine Normumsetzung schlechthin sondern lediglich um eine Synchronisationsanpassung, so daß die Bildinhalte, die abgerufen werden, insbesondere bei der grafischen Darstellung völlig unbrauchbare Bildinformationen vermitteln. Wie bereits eingangs ausgeführt, weist ein normalerweise auf einem NTSC-Empfänger dargestellter Kreis nunmehr eine Ellipse auf, da die Horizontalformate zwar gleich, die Vertikalformate jedoch wesentlich gedrängter erscheinen. Für diesen Betriebsfall ist nun nach Anspruch 2 vorgesehen, daß die Steuerschaltunng für die Vertikalamplitude mittels eines Handschalters, z.B. eines Tastschalters, zwangsweise so umgeschaltet wird, daß auch in diesem Betriebsfall die vertikalen nicht mit Inhalten versehenen Zeilen über den Bildrand hinaus geschrieben werden. Das Bild wird somit in vertikaler Richtung so geändert, daß keine Geometrieverzerrung des ursprünglichen Bildinhaltes gegeben ist.

Die Anpassung kann nur in Verbindung mit allen im Anspruch 1 angeführten Schaltungsmerkmalen sichergestellt werden. Voraussetzung ist, daß das Empfangsgerät automatisch oder zwangsweise von einem 50 Hz auf einen 60 Hz Betrieb, nämlich einem Vertikalfrequenzbetrieb, wie er bei NTSC gegeben ist, umschaltbar ist und die erhöhte Horizontalfrequenz unter Beibehaltung der Zeilenzahl und des Bildformtes einstellbar ist.

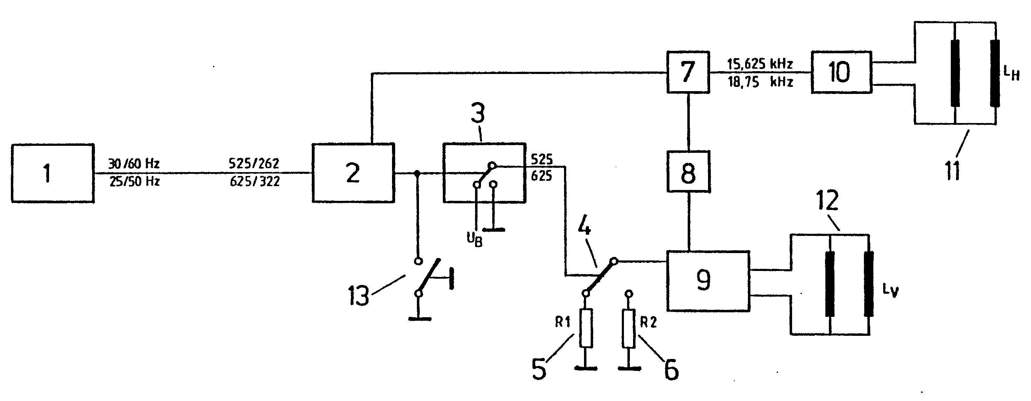

Die Erfindung wird nachfolgend anhand des in der Figur dargestellten Druckschaltbildes näher erläutert. In dem Computer 1 ist ein CRT-Controller integriert, der die errechneten und z.B. mit einer Auflösung von 256 dots horizontal und 192 dots vertikal abgelegten Bildinformationen aus einem Bildspeicher ausliest und zeilenweise entweder im NTSC-Raster ergänzt oder durch die fehlenden 100 Zeilen im PAL-Raster ausgibt. Bei NTSC-Betrieb sind bei einer Vertikalfrequenz von 60 Hz 525 Zeilen gegeben, so daß beim Zeilensprungverfahren 30 Halbbilder mit je 262 bzw. 263 Zeilen im Zeilenversatz geschrieben werden. Der Zeilenversatz zur Vermeidung des Zwischenzeilenflimmerns bei der Darstellung hat auf die Erfindung keine direkte Auswirkung und wird deshalb nicht näher beschrieben. Die Normerkennungsschaltung 2, mit der im Beispiel der FBAS-Eingang des Monitors verbunden ist, wertet die anliegenden Signale in einer Zählschaltung, wie sie z.B. im IC TDA 2579 der Firma Valvo enthalten ist, aus. Erkennt die Schaltung, daß die Zeilenzahl der NTSC-Norm entspricht, so wird automatisch eine Vertikalfrequenz von 60 Hz ausgegeben. Bei Anliegen eines NTSC-Signals kann das Vertikalsynchronsignal zur Ansteuerung eines Umschalters für den 60 Hz Betrieb des PAL-Empfängers auch verwendet werden. Der Horizontaloszillator 7 schaltet in Abhängigkeit des Steuersignals um und sychronisiert auf eine Horizontalfrequenz von 18,75 kHz, also einer von der Normfrequenz 15,625 kHz abweichenden Frequenz, um bei gleichem Bildformat die der Norm zugrundeliegende Anzahl von Zeilen (625) darstellen zu können. Parallel dazu erfolgt auch eine Umschaltung des Vertikaloszillators 8 von 50 auf 60 Hz, so daß die Bildinformation auf dem Bildschirm - über den Horizontal- (10) und Vertikalablenkgenerator (9) gesteuert - mit einer Vertikalfrequenz von 60 Hz und einer Bildwechselfrequenz von 18,75 kHz dargestellt wird. Der Bildinhalt ist aber gemäß der NTSC-Norm nur auf 525 Zeilen ausgelegt. Würde deshalb die Darstellung in diesem Modus erfolgen, so würde das Bild das Bildschirmformat in vertikaler Richtung nicht voll ausfüllen und mithin zu Geometrieverzerrungen führen. Die Normerkennungsschaltung 2 liefert deshalb in Abhängigkeit von der Bildwechselfrequenz und der Zeilenzahl eine weitere Schaltspannung, die über eine Schaltstufe 3 einen elektronischen Umschalter 4 steuert, der mit den die Bildamplitude verändernden Bauelementen der Vertikalablenkschaltung verbunden ist. Üblicherweise wird entweder der Vertikalablenkstrom durch anschaltbare Belastungswiderstände in Reihe mit den Ablenkspulen 12 direkt oder über eine Veränderung des Verstärkungsfaktors des Vertikalverstärkers indirekt verändert, so daß bestimmte Zeilen über den Bildrand in vertikaler Richtung hinausgeschrieben werden. Zu diesem Zweck sind die beiden Widerstände 5 und 6 symbolisch vorgesehen. Eine entsprechende Schaltung, die hier eingesetzt werden könnte, ist Gegenstand der bereits in der Beschreibungseinleitung genannten DE-B-31 50 243. Die zwischen dem elektronischen Schalter 4 und der Normerkennungsschaltung 2 vorgesehene Schaltstufe 3 ist notwendig, um bei bestimmten Betriebsfällen eine zwangsweise Steuerung zu bewirken. Hierfür ist ein Tastschalter 13 vorgesehen, über den eine Schaltspannung an die Schaltstufe 3 und damit an den Umschalter 4 anlegbar ist. Liegt ein normgerechtes PAL-Signal mit 50 Hz an, erfolgt weder eine Umschaltung der ersten Synchronisationsstufe noch der Vertikalablenkamplitude. Im anderen Fall, bei Anliegen NTSC-normgerechter Signale, erfolgt die automatische Umschaltung. Wird nun ein Signal von einem Computer 1 durch Hinzufügen von Leerzeilen und in Kenntnis der Informationsdarstellungsverfälschung PAL-gerecht angeboten, so ist es zur verzerrungsfreien Darstellung notwendig, den Schalter 13 zu betätigen, damit der den Vertikalstrom bestimmende Widerstand 5 über den Schalter 4 angeschaltet wird. Zu diesem Zweck dient der Tastschalter 13, der diese zwangsweise Umschaltung bewirkt. Durch die eingezeichneten Horizontalablenkspulen fließt der Ablenkstrom vom Horizontalablenkgenerator.

## Patentansprüche

1. Schaltungsanordnung in einem Bildschirmgerät zur Vermeidung von Geometrieverzerrungen bei der Darstellung von Texten, Grafiken und Symbolen auf dem Bildschirm einer Bildröhre, deren Elektronenstrahl auf mindestens zwei verschiedene Vertikalablenkfrequenzen und auf mindestens zwei verschiedene Horizontalablenkfrequenzen umschaltbar ist, wobei die Vertikalauflösung der darzustellenden Information von der durch die Zeilenzahl vorgegebenen, maximal möglichen bei konstantem Bildschirmformat (4:3) und Ablenkwinkel abweicht, **gekennzeichnet durch** folgende Merkmale:

   1. Ein umschaltbarer Vertikaloszillator (8) einer Vertikalablenkschaltung wird von einem Schaltsignal von einer ersten Schaltungsanordnung (2) in Abhängigkeit von den empfangenen Vertikalsynchronimpulsen auf die Frequenz der empfangenen Vertikalsynchronimpulse umgeschaltet und synchronisiert.

   2. Das Schaltsignal steuert zugleich einen umschaltbaren Horizontaloszillator (7) einer Horizontalablenkschaltung (10) auf eine solche Horizontalfrequenz, die zum Beschreiben des Bildschirms mit der höchstmöglichen Zeilenzahl nach der jeweiligen Norm bei konstantem Ablenkwinkel unter Berücksichtigung der Vertikalfrequenz erforderlich ist.

   3. Eine zweite Schaltungsanordnung (3) liefert in Abhängigkeit von den empfangenen Vertikalsynchronimpulsen und von der Anzahl der Zeilen eines Vollbildes oder eines Halbbildes beim Zeilensprungverfahren eine Steuerinformation für einen elektronischen Schalter, über den parallel oder in Reihe mit dem die Amplitude des Vertikalablenkstromes bestimmenden Bauteil (5), wie ein Widerstand, weitere Bauteile (6), zur Veränderung der Amplitude des Vertikalablenkstromes anschaltbar sind.

4. Die den Vertikalablenkstrom bestimmenden Bauteile (5, 6) sind so dimensioniert, daß die Vertikalamplitude bei der Darstellung eines Bildes mit einer geringeren Zeilenzahl als der maximal möglichen derart vergrößert wird, daß die Bildfläche auch in der Vertikalen voll ausgeschrieben wird.

2. Schaltungsanordnung nach Anspruch 1, dadurch gekennzeichnet, daß der elektronische Schalter für die Umschaltung der Vertikalamplitude mittels eines von Hand ausgelösten Schaltsignals zwangsweise steuerbar ist.

3. Schaltungsanordnung nach Anspruch 1 oder 2 zur Darstellung einer nach FCC-Norm im Vollbildraster (60 Hz) 525 Zeilen angebotenen Bildinformation auf einem Bildschirm eines Bildwiedergabegerätes, das nach CCIR-Norm mit 25, 50 Hz-Vollbildwiedergabe und 625 Zeilen arbeitet, dadurch gekennzeichnet, daß in Abhängigkeit von der höheren Vertikalfrequenz eine Umschaltung der ersten Schaltungsanordnung auf diese Vertikalfrequenz bei Beibehaltung der höheren Zeilenzahl (625) erfolgt, und daß in Abhängigkeit von einem weiteren von der Anzahl der Darstellungszeilen abgeleiteten Schaltsignal jene die Vertikalamplitude bestimmenden Bauteile über den elektronischen Umschalter angeschaltet werden, die den Vertikalablenkstrom so weit erhöhen, wie er zur Überschreibung der nicht belegten Zeilen über den vertikalen Bildrand hinaus notwendig ist.

4. Schaltungsanordnung nach einem der vorhergehenden Ansprüche in Verbindung mit dem Empfang eines FBAS-Signals oder eines getrennten RGB- und Synchronsignales von einem Computer, der auf FCC-Norm (NTSC) ausgelegt und auf CCIR (PAL) umschaltbar ist, dadurch gekennzeichnet, daß der elektronische Schalter zur Veränderung der Vertikalamplitude von einem handbetätigten Funktionsschalter zwangsweise so schaltbar ist, daß die Vertikalamplitude um das Maß der nicht belegten Zeilen erhöht wird und nur die die Darstellungsinformationen beinhaltenden Zeilen innerhalb der Vertikalen des Bildschirms geschrieben werden.

5. Schaltungsanordnung nach einem der vorhergehenden Ansprüche, dadurch gekennzeichnet, daß der Vertikalablenkstrom von einem in Reihe mit der Vertikalablenkspule geschalteten Widerstand bestimmt wird, und daß parallel hierzu ein weiterer Widerstand angeordnet ist, der über einen in Reihe angeordneten Schaltkontakt an- bzw. abschaltbar ist.

6. Schaltungsanordnung nach einem der Ansprüche 1 bis 4, dadurch gekennzeichnet, daß die Verstärkungsregelung des Vertikalendverstärkers zum Zwecke der Wiedergabe einer Vergrößerung des mittleren Bildausschnittes (Formatvergrößerung) derart erhöht wird, daß die Bildamplitude um denselben Faktor vergrößert wird wie die Horizontalamplitude, und daß der in Reihe mit dem Tangenskorrekturkondensator angeordnete Kondensator durch Öffnen des Nebenschlusses angeschaltet wird.

7. Schaltungsanordnung nach Anspruch 4, dadurch gekennzeichnet, daß der Computer ein Identifikationssignal analog zu der Vertikalfrequenz und zur Zeilenanzahl als direkte Schaltspannung herausgibt.

8. Schaltungsanordnung nach einem der Ansprüche 1 bis 6, dadurch gekennzeichnet, daß ein Prozessor vorgesehen ist, der anstelle der ersten und der zweiten Schaltungsanordnung in Abhängigkeit von den empfangenen Vertikalsynchronsignalen und Zeilenzahl der Bildsignale die Steuersignale für die Umschalter nach einem eingeschriebenen Programm errechnet und an die Umschalter ausgibt.

**Claims**

1. Circuit arrangement in an image screen device for the avoidance of geometric distortions in the representation of texts, graphics and symbols on the image screen of a picture tube, the electron beam of which is switchable to at least two different vertical deflection frequencies and to at least two different horizontal deflection frequencies, wherein the vertical resolution of the information to be represented differs from the maximum possible, which is preset by the number of lines, for constant image screen format (4:3) and deflection angle, characterised by the following features:

   1. A switchable vertical oscillator (8) of a vertical deflection circuit is switched by a switching signal from a first circuit arrangement (2) in dependence on the received vertical synchronising pulses to the frequency of the received vertical synchronising pulses and synchronised.

   2. The switching signal at the same time switches a switchable horizontal oscillator (7) of an horizontal deflection circuit (10) to such an horizontal frequency as is required for tracing the image screen at the highest possible line rate according to the respective standard at constant deflection deflection angle subject to consideration of the vertical frequency.

3. A second circuit arrangement (3), in dependence on the received vertical synchronising pulse and on the number of the lines of a frame or of a half frame in the case of the interlacing procedure, supplies a control information for an electronic switch, by way of which further components (6) for variation of the amplitude of the vertical deflection current are switchable in series with the component (5), such as resistor, determining the amplitude of the vertical deflection current.

4. The components (5, 6) determining the vertical deflection current are so dimensioned that the vertical amplitude in the representation of an image with a smaller number of lines than the maximum possible is increased in such a manner that the image area is fully traced also in the vertical [direction].

2. Circuit arrangement according to claim 1, characterised thereby, that the electronic switch for the switching of the vertical amplitude is constrainedly controllable by means of a manually initiated switching signal.

3. Circuit arrangement according to claim 1 or 2 for the representation of image information, which is offered at 525 lines in a frame raster (60 hertz) according to FCC standard, on an image screen of an image-reproducing device which operates at 25/50 hertz frame reproduction and 625 lines according to CCIR standard, characterised thereby, that a switching of the first circuit arrangement to the higher vertical frequency while maintaining the higher number of lines (625) takes place in dependence on this vertical frequency and that those components determining the vertical amplitude, which increase the vertical deflection current as far as is necessary for the tracing of the unoccupied lines beyond the vertical image edge, are switched in by way of the electronic switch in dependence on a further switching signal derived from the number of the reproduction lines.

4. Circuit arrangement according to one of the preceding claims in conjunction with the reception of an FBAS signal or a separate RGB and synchronising signal from a computer which is designed for FCC standard (NTSC) and switchable to CCIR standard (PAL), characterised thereby, that the electronic switch for variation of the vertical amplitude is so constrainedly switchable by a manually actuated function switch that the vertical amplitude is increased by the measure of the unoccupied lines and only the lines containing the represented information are traced within the vertical [dimension] of the image screen.

5. Circuit arrangement according to one of the preceding claims, characterised thereby, that the vertical deflection current is determined by a resistor connected in series with the vertical deflection coil and that arranged in parallel thereto is a further resistor which is switchable in or out by way of a switch contact arranged in series.

6. Circuit arrangement according to one of the claims 1 to 4, characterised thereby, that the regulation of the amplification of the vertical output amplifier is increased for the purpose of the reproduction of an enlargement of the middle image section (format enlargement) in such a manner that the image amplitude is increased by the same factor as the horizontal amplitude and that the capacitor, which is arranged in series with the tangent correction capacitor, is switched in through opening of the shunt.

7. Circuit arrangement according to claim 4, characterised thereby, that the computer issues an indentification signal analogous to the vertical frequency and to the number of lines as direct switching voltage.

8. Circuit arrangement according to one of the claims 1 to 6, characterised thereby, that a processor is provided, which - in place of the first and the second circuit arrangement - computes the control signals for the change-over switches according to an entered program and issues them to the change-over switches in dependence on the received vertical synchronising pulses and the number of lines of the image signals.

**Revendications**

1. Dispositif de commutation dans un appareil à écran pour éviter des déformations géométriques en cas de reproduction de textes, de graphiques et de symboles sur l'écran d'un tube cathodique dont le faisceau d'électrons peut être commuté sur au moins deux fréquences de balayage vertical différentes et sur au moins deux fréquences de balayage horizontal différentes, dans lequel la résolution verticale des informations à représenter diffère du maximum possible résultant du nombre de lignes pour un format d'écran constant (4; 3) et un angle de balayage constant, caractérisé par les points particuliers suivants :

1. un oscillateur vertical commutable (8) d'un circuit de balayage vertical est commuté et synchronisé par un signal de commutation provenant d'un premier dispositif de commutation (2) en fonction des impulsions de synchronisme vertical reçues sur la fréquence des impulsions de synchronisme vertical reçues ;

2. le signal de commutation commande également un oscillateur horizontal commutable (7) d'un circuit de balayage horizontal (10) sur une fréquence horizontale qui est nécessaire pour occuper l'écran avec le nombre de lignes le plus élevé possible suivant la norme utilisée pour un angle de balayage constant, en tenant compte de la fréquence verticale ;

3. un deuxième circuit de commutation (3) fournit, en fonction des impulsions de synchronisation verticale reçues et du nombre de lignes d'une image complète ou d'une demi-image, suivant le procédé à saut de ligne, une information de commande pour un commutateur électronique par lequel d'autres composants (6) peuvent être enclenchés pour modifier l'amplitude du courant de balayage vertical, en parallèle ou en série, avec le composant (5) déterminant l'amplitude du courant de balayage vertical ;

4. les composants (5, 6) déterminant le courant de balayage vertical sont dimensionnés de sorte que l'amplitude verticale soit augmentée afin que la surface de l'image soit occupée complètement également dans le sens vertical, en cas de reproduction d'une image avec un nombre de lignes inférieur au maximum possible.

2. Dispositif de commutation selon la revendication 1, caractérisé par le fait que le commutateur électronique pour la commutation de l'amplitude verticale peut être commandé à volonté au moyen d'un signal de commutation créé manuellement.

3. Dispositif de commutation selon la revendication 1 ou 2 pour représenter une formation d'image envoyée suivant la norme FCC en trame d'image complète (60 Hz) de 525 lignes sur un écran d'un appareil de reproduction d'image, qui fonctionne suivant la norme CCIR avec reproduction d'image complète de 25,50 Hz et 625 lignes, caractérisé par le fait qu'une commutation du premier dispositif de commutation sur cette fréquence verticale a lieu en fonction de la fréquence verticale plus élevée, en conservant le nombre de lignes plus élevée (625), et qu'en fonction d'un autre signal de commutation dérivé du nombre de lignes de la reproduction, les composants déterminant l'amplitude verticale sont enclenchés par l'intermédiaire du commutateur électronique, lesquels augmentent le courant de balayage vertical dans la mesure nécessaire pour occuper les lignes non occupées au-delà du bord vertical de l'image.

4. Dispositif de commutation selon l'une des revendications précédentes, en liaison avec la réception d'un signal FBAS ou d'un signal de synchronisme et RGB séparés provenant d'un ordinateur, qui est conçu suivant la norme FCC (NTSC) et qui peut être commuté sur CCIR (PAL), caractérisé par le fait que le commutateur électronique peut être commuté à volonté par un commutateur de fonction manoeuvré manuellement afin de modifier l'amplitude verticale, que l'amplitude verticale est augmentée en proportion des lignes non occupées et que seules les lignes contenant les informations de reproduction sont inscrites à l'intérieur des verticales de l'écran.

5. Dispositif de commutation selon l'une des revendications précédentes, caractérisé par le fait que le courant de balayage vertical est déterminé par une résistance, connectée en série avec la bobine de balayage vertical, et que, parallèlement à ladite résistance, est montée une autre résistance qui peut être enclenchée et déclenchée par l'intermédiaire d'un contact de commutation monté en série.

6. Dispositif de commutation selon l'une des revendications 1 à 4, caractérisé par le fait que le réglage de l'amplification de l'amplificateur terminal vertical est augmenté en vue de la reproduction d'un agrandissement de la section centrale de l'image (agrandissement de format), de telle façon que l'amplitude d'image est augmentée du même facteur que l'amplitude horizontale, et que le condensateur monté en série avec le condensateur de correction de tangence est enclenché par ouverture du circuit en dérivation.

7. Dispositif de commutation selon la revendication 4, caractérisé par le fait que l'ordinateur émet un signal d'identification analogue à la fréquence verticale et au nombre de lignes, sous forme de tension de commutation directe.

8. Dispositif de commutation selon l'une des revendications 1 à 6, caractérisé par le fait qu'il est prévu un processeur qui calcule les signaux de commande pour les commutateurs, selon un programme inscrit, au lieu du premier et du deuxième dispositif de commutation, en fonction des signaux de synchronisation verticale reçus et du nombre de lignes des signaux d'image, et qui les transmet aux commutateurs.

EP 0 219 638 B1